# EUROPEAN PATENT SPECIFICATION

(11) **EP 4 307 440 B1**
(45) Date of publication and mention of the grant of the patent: **04.02.2026**
(21) Application number: 22935923.7
(22) Date of filing: 23.12.2022
(51) Int. Cl.: H01M 10/637, H01M 10/617, H01M 10/48, H01M 10/44

(54) **BATTERY CONTROL SYSTEM FOR PREVENTING IMBALANCE BETWEEN BATTERY CELLS, AND CONTROL METHOD THEREFOR**
BATTERIESTEUERUNGSSYSTEM ZUR VERHINDERUNG VON UNGLEICHGEWICHTEN ZWISCHEN BATTERIEZELLEN UND STEUERUNGSVERFAHREN DAFÜR
SYSTÈME DE COMMANDE DE BATTERIE POUR PRÉVENIR UN DÉSÉQUILIBRE ENTRE DES ÉLÉMENTS DE BATTERIE ET PROCÉDÉ DE COMMANDE ASSOCIÉ

(30) Priority: 31.03.2022 KR 20220040370
(43) Date of publication of application: 17.01.2024
(73) Proprietor: LG Energy Solution, Ltd., Seoul 07335 (KR)
(72) Inventor: KIM, Jae Hyung, Daejeon 34122 (KR)
(74) Representative: Goddar, Heinz J.
(86) International application number: PCT/KR2022/021205
(87) International publication number: WO 2023/191253

(56) References cited:
- JP-A- 2002 298 930
- JP-A- 2003 134 687
- JP-A- 2003 134 687
- JP-A- 2009 059 504
- JP-A- 2009 059 504
- KR-A- 20180 103 081
- KR-A- 20190 028 201

## Description

### [Technical Field]

This application claims priority to and the benefit of Korean Patent Application No.10-2022-0040370 filed in the Korean Intellectual Property Office on March 31, 2022.

The present invention relates to a battery control system and a method for controlling the battery control system, and more particularly, to a battery control system for preventing state deterioration due to temperature imbalance among the battery cells and a method for controlling the battery control system.

### [Background Art]

A secondary battery is a battery that can be recharged and reused even after being discharged, which may be used as an energy source for small devices such as mobile phones, tablet PCs, and vacuum cleaners and also used as an energy source for medium-to-large devices such as electric vehicles and an energy storage system for smart grids.

The secondary battery is applied to a system as a form of an assembly such as a battery module in which a plurality of battery cells are connected in series and parallel or a battery pack in which battery modules are connected in series and parallel according to system requirements.

A plurality of battery cells included in the battery assembly may have different external temperature environments depending on a seating position according to a system design, and thus, an imbalance problem may occur among cells in which performance and deterioration speeds of respective cells are different as the battery cells operate at different temperatures. In particular, if a battery cell operating in a high-temperature environment is fully charged and then trickle-charged due to current consumption of the system, performance degradation and deterioration are accelerated, and an imbalance among battery cells in the battery assembly may further intensify.

JP 2009/059504 A describes a battery pack for a secondary battery, which includes a temperature detection unit, a control unit, and a memory unit to measure and manage the temperature of individual battery cells to prevent temperature imbalances. The control unit adjusts the charge stop voltage, charge stop current, discharge stop voltage, and discharge stop current if the detected temperature difference, in particular between maximum and minimum temperatures, exceeds a preset specified value, thereby ensuring safe and efficient charging and discharging of the battery cells. The charge stop voltage, the charge stop current, the discharge stop voltage and the discharge stop current are variable according to, for example, a temperature difference, and are set to values that do not deteriorate the battery cell by performing a predetermined calculation.

### [Detailed Description of the Invention]

### [Technical Problem]

To obviate one or more problems of the related art, embodiments according to an object of the present disclosure provide a battery control system for preventing degradation of state due to temperature imbalance between battery cells.

To obviate one or more problems of the related art, embodiments according to another object of the present disclosure provide a battery control apparatus for preventing degradation of state due to temperature imbalance between battery cells.

To obviate one or more problems of the related art, embodiments according to another object of the present disclosure provide a control method of a battery control system for preventing degradation of state due to temperature imbalance between battery cells.

### [Technical Solution]

The invention is set out in the independent claims. Particular embodiments of the invention are given by the dependent claims. In order to achieve the objective of the present disclosure, a battery control system may comprise: a temperature measuring device configured to measure a temperature of a first battery cell disposed at a first point among a plurality of battery cells included in a battery assembly and a temperature of a second battery cell disposed at a second point among the plurality of battery cells, wherein the second point is spaced apart from the first point; and a controller configured to monitor the temperature of the first battery cell and the temperature of the second battery cell and perform a predefined control operation for preventing state degradation due to temperature imbalance among the plurality of battery cells based on at least one of the temperature of the first battery cell and the temperature of the second battery cell.

The first point may correspond to a location having a higher instantaneous temperature value or a higher average temperature value than that of the second point.

The first point may correspond to a location having the highest instantaneous temperature value or the highest average temperature value in the battery assembly and the second point may correspond to a location having the lowest instantaneous temperature value or the lowest average temperature value within the battery assembly.

The controller may be configured to perform the predefined control operation according to whether or not the at least one of a first condition and a second condition is satisfied, wherein the first condition is the temperature of the first battery cell exceeding a predefined upper temperature limit and the second condition is a difference between the temperature of the first battery cell and the temperature of the second battery cell exceeding a predetermined reference difference value.

The controller may be configured to: when an event satisfying at least one of the first condition and the second condition occurs during charging of the plurality of battery cells, perform a first control operation of lowering a full charge voltage of the plurality of battery cells to a first predetermined voltage value.

The controller may be configured to: when an event in which at least one of the satisfied conditions during charging of the plurality of battery cells is released occurs after the first control operation, increase the lowered full charge voltage value to a second predefined voltage value.

The controller may be configured to: when an event satisfying at least one of the first condition and the second condition occurs in a fully charged state of the plurality of battery cells, perform a second control operation to block trickle charging for the plurality of battery cells.

The controller may be configured to: when an event in which at least one of the satisfied conditions is released occurs in a state in which the trickle charge for the plurality of battery cells is blocked, after the second control operation, allow trickle charging for the plurality of battery cells.

According to another embodiment of the present disclosure, a battery control apparatus connected with a temperature measuring device configured to measure a temperature of a first battery cell disposed at a first point among a plurality of battery cells included in a battery assembly and a temperature of a second battery cell disposed at a second point among the plurality of battery cells, wherein the second point is spaced apart from the first point, the apparatus may comprise: at least one processor; and a non-transitory memory configured to store at least one instruction executed by the at least one processor.

The at least one instruction may include: an instruction to monitor the temperature of the first battery cell and the temperature of the second battery cell; and an instruction to perform a predefined control operation for preventing state degradation due to temperature imbalance between the plurality of battery cells based on at least one of the temperature of the first battery cell and the temperature of the second battery cell.

The first point may correspond to a location having a higher instantaneous temperature value or a higher average temperature value than that of the second point.

The first point may correspond to a location having the highest instantaneous temperature value or the highest average temperature value in the battery assembly and the second point may correspond to a location having the lowest instantaneous temperature value or the lowest average temperature value within the battery assembly.

The instruction to perform the predefined control operation may include an instruction to: perform the predefined control operation according to whether or not the at least one of a first condition and a second condition is satisfied, wherein the first condition is the temperature of the first battery cell exceeding a predefined upper temperature limit and the second condition is a difference between the temperature of the first battery cell and the temperature of the second battery cell exceeding a predetermined reference difference value.

The instruction to perform the predefined control operation may include an instruction to: when an event satisfying at least one of the first condition and the second condition occurs during charging of the plurality of battery cells, perform a first control operation of lowering a full charge voltage of the plurality of battery cells to a first predetermined voltage value.

The instruction to perform a predefined control operation may include an instruction to: when an event in which at least one of the satisfied conditions during charging of the plurality of battery cells is released occurs, after the first control operation, increase the lowered full charge voltage value to a second predefined voltage value.

The instruction to perform a predefined control operation may include an instruction to: when an event satisfying at least one of the first condition and the second condition occurs in a fully charged state of the plurality of battery cells, perform a second control operation to block trickle charging for the plurality of battery cells.

The instruction to perform a predefined control operation may include an instruction to: when an event in which at least one of the satisfied conditions is released occurs in a state in which the trickle charge for the plurality of battery cells is blocked, after the second control operation, allow trickle charging for the plurality of battery cells.

According to another embodiment of the present disclosure, a control method of a battery control system including a temperature measuring device configured to measure a temperature of a first battery cell disposed at a first point among a plurality of battery cells included in a battery assembly and a temperature of a second battery cell disposed at a second point among the plurality of battery cells, wherein the second point is spaced apart from the first point, and a control apparatus configured to perform a predefined control operation based on the temperature of the first battery cell and the temperature of the second battery cell, the method may comprise: monitoring the temperature of the first battery cell and the temperature of the second battery cell; and performing a predefined control operation for preventing state degradation due to temperature imbalance between the plurality of battery cells based on at least one of the temperature of the first battery cell and the temperature of the second battery cell.

The performing a predefined control operation may include: performing the predefined control operation according to whether or not the at least one of a first condition and a second condition is satisfied, wherein the first condition is the temperature of the first battery cell exceeding a predefined upper temperature limit and the second condition is a difference between the temperature of the first battery cell and the temperature of the second battery cell exceeding a predetermined reference difference value.

The performing the predefined control operation may include: when an event satisfying at least one of the first condition and the second condition occurs during charging of the plurality of battery cells, performing a first control operation of lowering a full charge voltage of the plurality of battery cells to a first predetermined voltage value.

The performing a predefined control operation may further include: when an event in which at least one of the satisfied conditions during charging of the plurality of battery cells is released occurs, after the first control operation, increasing the lowered full charge voltage value to a second predefined voltage value.

The performing a predefined control operation may include: when an event satisfying at least one of the first condition and the second condition occurs in a fully charged state of the plurality of battery cells, performing a second control operation to block trickle charging for the plurality of battery cells.

The performing a predefined control operation may include: when an event in which at least one of the satisfied conditions is released occurs in a state in which the trickle charge for the plurality of battery cells is blocked, after the second control operation, allowing trickle charging for the plurality of battery cells.

### [Advantageous Effects]

According to embodiments of the present disclosure, it is possible to prevent state deterioration due to temperature imbalance among battery cells which operate in different temperature environments due to a seating position of a battery assembly.

In addition, according to embodiments of the present invention, it is possible to prevent performance degradation and accelerated deterioration of battery cells operating in a high-temperature environment due to trickle charging.

### [Brief Description of the Drawings]

FIG. 1 shows a plurality of battery cells included in a battery assembly;
FIG. 2 illustrates a temperature imbalance state among a plurality of battery cells in a battery assembly;
FIG. 3 is a block diagram of a battery control system according to embodiments of the present invention;
FIG. 4 is an operation flowchart of a control method of a battery control system according to an embodiment of the present invention;
FIG. 5 is an operation flowchart of a control method of a battery control system according to another embodiment of the present invention; and
FIG. 6 is a block diagram of a battery control apparatus according to embodiments of the present invention.

### [Best Mode]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Some terms used herein are defined as follows.

A battery cell refers to a minimum unit that serves to store power and a battery module refers to an aggregate of a plurality of battery cells connected in series and parallel.

A battery pack or battery rack refers to a system of a minimum single structure assembled by connecting modules set by a battery manufacturer in series/parallel, which can be monitored and controlled by a battery management system (BMS), and may include several battery modules and a battery protection unit or any other protection device.

A battery bank refers to a group of large-scale battery rack systems configured by connecting a plurality of racks in parallel. A bank BMS for a battery bank may monitor and control several rack BMSs, each of which manages a battery rack.

A battery assembly may include a plurality of electrically connected battery cells and refers to an assembly that functions as a power supply source by being applied to a specific system or device. Here, the battery assembly may mean a battery module, a battery pack, a battery rack, or a battery bank, but the scope of the present invention is not limited to these entities.

State of Charge (SOC) refers to a current state of charge of a battery, represented in percent points [%], and State of Health (SOH) may be a current condition of a battery compared to its ideal or original conditions, represented in percent points [%].

A nominal capacity (Nominal Capa.) refers to a capacity [Ah] of a battery set during development by a battery manufacturer.

Hereinafter, exemplary embodiments of the present invention will be described in detail with reference to the accompanying drawings.

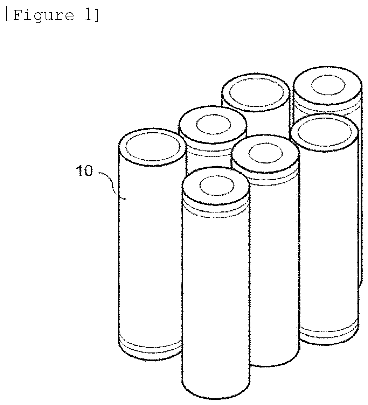

FIG. 1 shows a plurality of battery cells included in a battery assembly.

A plurality of battery cells 10 are connected in series and parallel according to requirements of a system or device to form a battery assembly.

As shown in FIG. 1, the battery cell 10 may be applied to a cylindrical battery, but the scope of the present invention is not limited to the shape type of the battery cell, and may be applied to a pouch-shaped battery or a prismatic battery.

Each of the battery cells 10 may be seated in a battery holder and then accommodated in a battery case so that the battery cells 10 may be spaced apart from each other and arranged at predetermined positions.

The battery case may have an air inlet hole or an air outlet hole to cool the battery cells 10 accommodated therein.

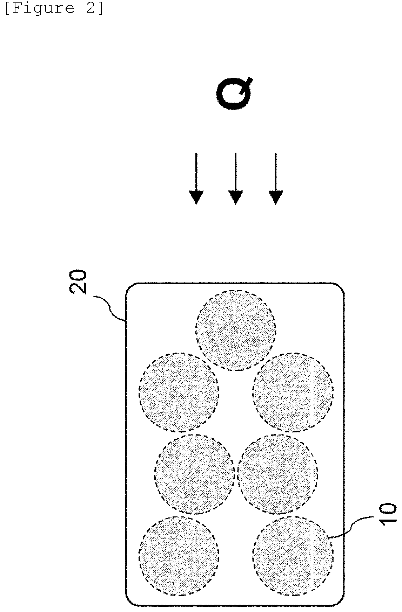

FIG. 2 illustrates a temperature imbalance state between a plurality of battery cells in a battery assembly.

The battery assembly 20 is seated in a specific location according to a system or device design. Here, a temperature imbalance may occur among battery cells 10 due to a design structure and operations of the system to which the battery assembly 20 is applied.

For example, as shown in FIG. 2, when a device generating thermal energy Q is disposed near the battery assembly 20, a battery cell disposed close to the device operates in a high-temperature environment and battery cells disposed far away from the device operate in a relatively low-temperature environment.

In addition, when an operating mode (e.g., strong, medium, or weak) of a device (e.g., a motor) that generates thermal energy Q is changed as needed, operating temperatures of the battery cells 10 continuously vary.

If temperature imbalance occurs among battery cells due to the design structure and operations of the system, performances and deterioration rates of the battery cells become different as the battery cells continuously operate in different temperature environments, and eventually the lifespan of the battery assembly 20 may be shortened. In addition, when trickle charging proceeds due to current consumption of the system after fully charging the battery, trickle charging at a high temperature accelerates performance degradation and deterioration of the battery cells 10, thereby further intensifying imbalance among battery cells.

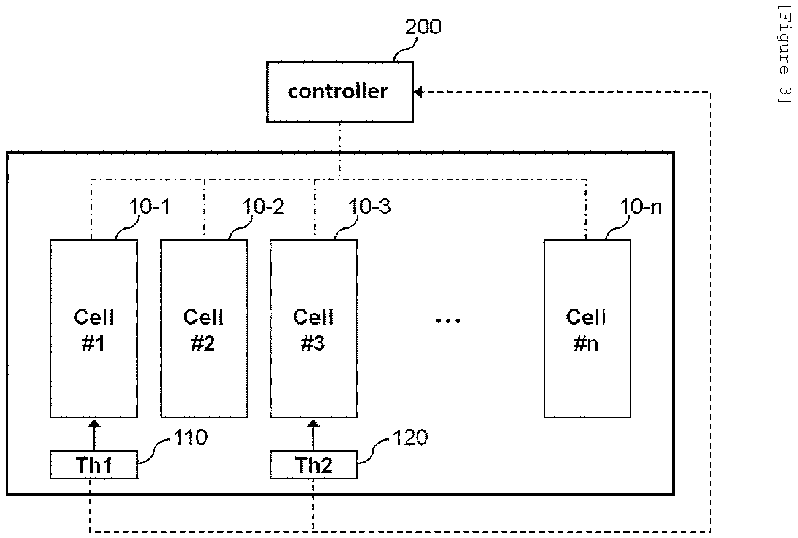

Hereinafter, with reference to FIGS. 3 to 6, various embodiments of the present invention for preventing battery cells from deteriorating due to temperature imbalance will be described.

FIG. 3 is a block diagram of a battery control system according to embodiments of the present invention.

A battery control system according to embodiments of the present invention may include temperature measuring units 110, 120 and a controller 200 as shown in FIG. 3. Here, the temperature measuring units 110 and 120 may measure the temperatures of the plurality of battery cells 10-1, 10-2, ... , 10-n, and the controller 200 may monitor the measured temperatures to determine when temperature imbalance occurs and to perform a corresponding control operation.

The temperature measuring units 110 and 120 may be configured to measure temperatures of some battery cells among the plurality of battery cells 10-1, 10-2, ... , 10-n. The battery control system according to the present invention can simplify a control process and improve data processing efficiency by performing control measures to prevent state degradation based on temperatures of some battery cells without monitoring the temperature of all battery cells.

The temperature measurement unit may include a first temperature sensor 110 and a second temperature sensor 120. Here, the first temperature sensor 110 may measure a temperature of the first battery cell 10-1 disposed at the first point and the second temperature sensor 120 may measure a temperature of the second battery cell 10-3 which is disposed at a second point spaced apart from the first point.

The first point may correspond to a point indicating a higher instantaneous temperature value or a higher average temperature value than that of the second point. In other words, in FIG. 3, the first battery cell 10-1 corresponds to a battery disposed in a higher temperature environment than the second battery cell 10-3, and the temperature measurement units may be configured to measure temperatures of the respective battery cells 10-1 and 10-3.

Here, the first point may correspond to a point showing the highest instantaneous temperature value or the highest average temperature value within the battery assembly 20, and the second point may correspond to a point showing the lowest instantaneous temperature or the lowest average temperature value within the battery assembly 20. In other words, the first temperature sensor 110 may be configured to measure the temperature of the battery cell 10-1 disposed in the highest temperature environment, and the second temperature sensor 120 may be configured to measure the temperature of the battery cell 10-3 disposed in the lowest temperature environment.

Here, the first and second points may be determined by measuring temperature values per unit time for all battery cells 10-1, 10-2, ... , 10-n included in the battery assembly 20 through a preliminary temperature measurement test, and comparing instantaneous temperature values or average temperature values of respective battery cells 10-1 , 10-2, ... , 10-n.

The controller 200 may receive temperature measurement values of the first battery cell 10-1 and the second battery cell 10-3 from the first and second temperature sensors 110 and 120, and monitor temperatures of the first battery cell 10-1 and the second battery cell 10-3.

The controller 200 may determine whether a temperature imbalance among the battery cells has occurred based on the temperature values of the first battery cell 10-1 and the second battery cell 10-3. Here, the controller 200 may determine that a temperature imbalance between battery cells has occurred if at least one of conditions is satisfied, wherein the conditions include: a first condition in which the temperature T1 of the first battery cell 10-1 exceeds a predefined upper temperature limit value Tmax (T1 > Tmax); and a second condition in which a difference between the temperature T1 of the first battery cell 10-1 and the temperature T2 of the second battery cell 10-3 exceeds a predefined reference difference value Td (T1 - T2 > Td).

When a temperature imbalance among battery cells occurs, the controller 200 may perform different control operations according to operating states of the battery cells.

In a process of charging the battery cells, when an event that satisfies at least one of the first condition (T1 > Tmax) and the second condition (T1 - T2 > Td) occurs, the controller 200 may perform a first control operation of lowering the full charge voltage for a plurality of battery cells to a predefined voltage value may be performed. In other words, when a temperature imbalance occurs during a charge process of the battery cells, the controller 200 may minimize performance imbalance of the battery cells by reducing the full charge voltage values of all battery cells (for example, from 5V to 4.10V). Here, the adjusted value of the full charge voltage may be determined based on at least one of the first battery temperature value (T1), the difference between the first and second battery temperatures (T1 - T2), a state of the battery (e.g., SOC or SOH), and a number of temperature imbalance occurrences. For instance, the full charge voltage value may be adjusted to a lower value as the first battery temperature value (T1) or the difference between the first and second battery temperatures (T1 - T2) increases, and the full charge voltage value may be adjusted to a lower value as the number of accumulated temperature imbalance occurrences increases.

In a process of charging the battery cells after the first control operation, when an event in which at least one of the conditions satisfied for the first control operation is released occurs, the controller 200 may adjust the downwardly adjusted full charge voltage value upward to a preset voltage value. In other words, after the full charge voltage value is adjusted down according to an occurrence of a temperature imbalance condition and the temperature imbalance condition is released during a charging process, the controller 200 may increase the full charge voltage values of all battery cells to operate at maximum performance. Here, the full charge voltage value may be adjusted to an initially set full charge voltage value (e.g., returning from 4.10V to 5V).

When an event that satisfies at least one of the first condition (T1 > Tmax) and the second condition (T1 - T2 > Td) occurs during the battery cells being in a fully charged state, the controller 200 may perform a second control operation of blocking trickle charge for the plurality of battery cells. In other words, when a temperature imbalance occurs in a fully charged state of battery cells, the controller 200 may block trickle charging of all battery cells to prevent deterioration and performance degradation of battery cells. Here, the controller 200 may block trickle charge by controlling a switch (e.g., C-FET) located in a trickle charge path to be in an OFF state.

When an event in which at least one of the conditions satisfied for the second control operation is released occurs in a state in which trickle charge of the plurality of battery cells is blocked according to the second control operation, the controller 200 may allow trickle charge for a plurality of batteries. In other words, when the temperature imbalance state is released after the trickle charge is blocked due to an occurrence of the temperature imbalance in a fully charged state of the batteries, the controller 200 may permit trickle charge of all the battery cells to compensate for micro-discharge due to current consumption of the system. Here, the controller 200 may allow trickle charge by controlling a switch (e.g., C-FET) located in a trickle charge path to be in an ON state.

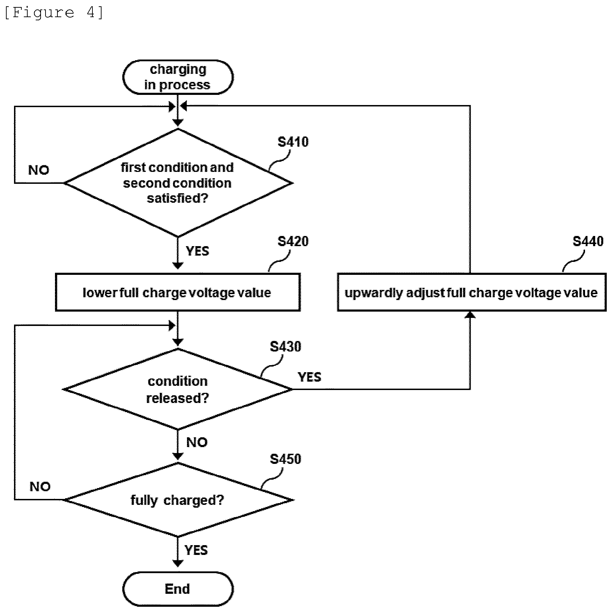

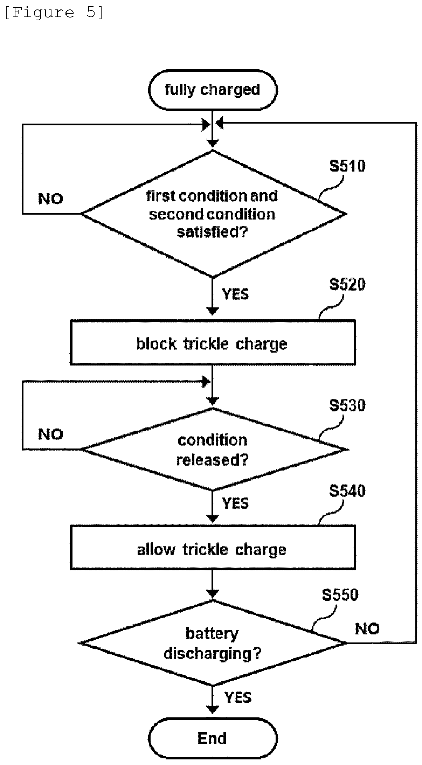

Hereinafter, a control method of a battery control system according to embodiments of the present invention will be described with reference to FIGS. 4 and 5.

A control method of a battery control system according to embodiments of the present invention may be performed by a control apparatus 200 interworking with temperature measuring units 110 and 120 that measure a temperature of a first battery cell disposed at a first point and a temperature of a second battery cell disposed at a second point which is spaced apart from the first point.

With reference to FIG. 4, a control process in a state of battery charging will be described.

The first temperature sensor 110 may measure a temperature T1 of the battery cell 10-1 disposed in the highest temperature environment and the second temperature sensor 120 may measure a temperature T2 of the battery cell 10-3 disposed in the lowest temperature environment.

The control apparatus 200 may receive temperature measurement values of the first battery cell and the second battery cell from the first and second temperature sensors 110 and 120 at predetermined time intervals and monitor temperatures (T1, T2) of the first battery cell and the second battery cell.

The control apparatus 200 may check if at least one of a first condition and a second condition is satisfied to determine whether a temperature imbalance state between battery cells has occurred (S410), wherein the first condition is a condition in which the temperature T1 of the first battery cell exceeds a predefined upper temperature limit value Tmax (T1 > Tmax); and the second condition is a condition in which a difference between the temperature T1 of the first battery cell and the temperature T2 of the second battery cell exceeds a predefined reference difference value Td (T1 - T2 > Td). Here, the control apparatus 200 may determine that a temperature imbalance between battery cells has occurred when both the first and second conditions are satisfied.

When an event that satisfies both the first condition and the second condition occurs, the control apparatus 200 may lower the full charge voltage value of the plurality of battery cells to a predefined voltage value (perform the first control operation) (S420). In other words, when a temperature imbalance occurs during a charge process of the battery cells, the control apparatus 200 may reduce the full charge voltage values of all battery cells (e.g., from 5V to 4.10V) to minimize performance imbalance of the battery cells.

Thereafter, the control apparatus 200 may check whether an event in which at least one of the first and second conditions is released occurs (S430). Here, the control apparatus 200 may determine that the temperature imbalance between the battery cells is resolved when both the first and second conditions are released.

When an event in which both the first and second conditions are released occurs, the control apparatus 200 may upwardly adjust the lowered full charge voltage value to a predefined voltage value (S440). Here, the full charge voltage value may be adjusted to the initially set full charge voltage value (e.g., return to 5V from 4.10V), and thus, all battery cells may operate at maximum performance.

If an event in which both the first and second conditions are released does not occur, the control apparatus 200 checks whether the battery is fully charged (S450). If the battery is not in a fully charged state, it returns to step S430 of checking whether the first and second conditions are released, and if the battery is in a fully charged state, the control process ends.

Next, referring to FIG. 5, a control process in a fully charged state of the battery will be described. Meanwhile, the fully charged state of the battery means a state in which battery cells are charged to a full charge voltage value (an initial set value, a value adjusted downward by the first control operation, or a value adjusted upward after the first control operation).

The first temperature sensor 110 measures a temperature T1 of the battery cell 10-1 disposed in the highest temperature environment and the second temperature sensor 120 measures a temperature T2 of the battery cell 10-3 disposed in the lowest temperature environment.

The control apparatus 200 may receive temperature measurement values of the first battery cell and the second battery cell from the first and second temperature sensors 110 and 120 at predetermined unit time intervals, and monitor the battery cell temperatures (T1, T2).

The control apparatus 200 may check whether at least one of the first condition (T1 > Tmax) and the second condition (T1 - T2 > Td) is satisfied to determine whether a temperature imbalance state between battery cells has occurred (S510). Here, the control apparatus 200 may determine that a temperature imbalance between battery cells has occurred when both the first and second conditions are satisfied.

When an event that satisfies both the first condition and the second condition occurs, the control apparatus 200 may block trickle charge of the plurality of battery cells (perform a second control operation) (S520). In other words, when a temperature imbalance occurs in a fully charged state of battery cells, the control apparatus 200 may block trickle charge of all battery cells to prevent deterioration and degradation of battery cells.

Thereafter, the control apparatus 200 may check whether an event in which at least one of the first and second conditions is released occurs (S530). Here, the control apparatus 200 may determine that the temperature imbalance between the battery cells is resolved when both the first and second conditions are released.

When an event in which both the first and second conditions are released occurs, the control apparatus 200 may allow trickle charge of the plurality of battery cells (S540). In other words, when the temperature imbalance state is released, the controller 200 may permit trickle charging of all battery cells to compensate for micro-discharge due to system current consumption.

After trickle charging is allowed, the control apparatus 200 may check whether the battery cells are in a discharging state due to supplying power to a system (S550). It may return to step S510 of checking whether a temperature imbalance state between the battery cells has occurred in the instance that the battery is not in a discharged state and the control process may be terminated in the instance that the battery is in a discharged state.

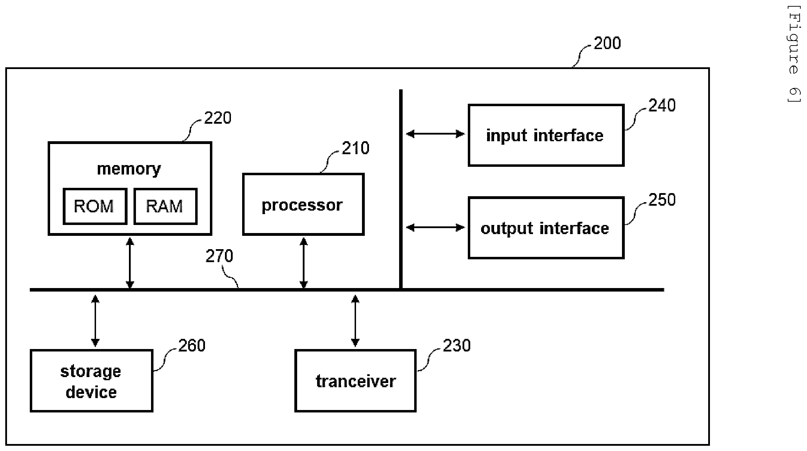

FIG. 6 is a block diagram of a battery control apparatus according to embodiments of the present invention.

Hereinafter, main elements of the control apparatus 200 for performing a control method according to embodiments of the present invention will be described with reference to FIG. 6.

The control apparatus 200 according to embodiments of the present invention may interwork with temperature measurement units 110 and 120 that measure a temperature of a first battery cell disposed at a first point and a temperature of a second battery cell disposed at a second point and may include at least one processor 210, a memory 220 for storing at least one command executed by the at least one processor, and a transceiver 230 for communicating with other components in the battery control system.

The control apparatus 200 according to embodiments of the present invention may be implemented by being included in a battery management system (BMS) or an energy management system (EMS), but the scope of the present invention is not limited to these entities.

The at least one instruction executed by the at least one processor may include: an instruction to monitor the temperature of the first battery cell and the temperature of the second battery cell; and an instruction to perform a predefined control operation for preventing state degradation due to temperature imbalance between the battery cells based on at least one of the temperature of the first battery cell and the temperature of the second battery cell.

The instruction to perform the predefined control operation may include an instruction to perform the predefined control operation according to whether or not the at least one of a first condition and a second condition is satisfied.

The instruction to perform the predefined control operation may include an instruction to, in the instance that an event satisfying at least one of the first condition and the second condition occurs while the plurality of battery cells are being charged, perform a first control operation of lowering a full charge voltage of the plurality of battery cells to a predetermined voltage value.

The instruction to perform the predefined control operation may include an instruction to, in the instance that an event in which at least one of the satisfied conditions while the plurality of battery cells are being charged is released occurs after the first control operation, increase the lowered full charge voltage value to a predefined voltage value.

The instruction to perform the predefined control operation may include an instruction to, in the instance that an event satisfying at least one of the first condition and the second condition occurs in a fully charged state of the plurality of battery cells, perform a second control operation to block trickle charge for the plurality of battery cells.

The instruction to perform the predefined control operation may include an instruction to, in the instance that an event in which at least one of the satisfied conditions is released occurs in a state in which the trickle charge for the plurality of battery cells is blocked after the second control operation, allow trickle charge for the plurality of battery cells.

The control apparatus 200 may further include an input interface 240, an output interface 250, a storage device 260, and the like. Each component included in the control apparatus 200 may be connected by a bus 270 to communicate with each other.

Here, the processor 210 may mean a central processing unit (CPU), a graphics processing unit (GPU), or a dedicated processor for performing methods according to embodiments of the present invention. The memory (or storage device) may be composed of at least one of a volatile storage medium and a non-volatile storage medium. For example, the memory may include at least one of read only memory (ROM) and random access memory (RAM).

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

## Claims

1. A battery control system comprising:
a temperature measuring device (110, 120) configured to measure a temperature of a first battery cell (10-1) disposed at a first point among a plurality of battery cells (10, 10-n) included in a battery assembly (20), and a temperature of a second battery cell (10-2) disposed at a second point among the plurality of battery cells (10, 10-n), wherein the second point is spaced apart from the first point; and
a controller (200) configured to:
monitor the temperature (T1) of the first battery cell (10-1) and the temperature (T2) of the second battery cell (10-2), and
perform a predefined control operation for preventing state degradation due to temperature imbalance among the plurality of battery cells (10, 10-n) based on a number of accumulated temperature imbalance occurrences and at least one of the temperature (T1) of the first battery cell (10-1) and the temperature (T2) of the second battery cell (10-2).

2. The battery control system of claim 1, wherein the first point corresponds to a location having a higher instantaneous temperature value or a higher average temperature value than that of the second point.

3. The battery control system of claim 2, wherein the first point corresponds to a location having a highest instantaneous temperature value or a highest average temperature value in the battery assembly (20), and
wherein the second point corresponds to a location having a lowest instantaneous temperature value or a lowest average temperature value within the battery assembly (20).

4. The battery control system of claim 1, wherein the controller (200) is configured to perform the predefined control operation according to whether or not the at least one of a first condition and a second condition is satisfied, wherein the first condition is the temperature (T1) of the first battery cell (10-1) exceeding a predefined upper temperature limit (Tmax), and
wherein the second condition is a difference between the temperature (T1) of the first battery cell (10-1) and the temperature (T2) of the second battery cell (10-2) exceeding a predetermined reference difference value (Td).

5. The battery control system of claim 4, wherein the controller (200) is configured to:
when an event satisfying at least one of the first condition and the second condition occurs during charging of the plurality of battery cells (10, 10-n),
perform a first control operation of lowering a full charge voltage of the plurality of battery cells (10, 10-n) to a first predetermined voltage value being adjusted to a lower value as the number of accumulated temperature imbalance occurrences increases.

6. The battery control system of claim 5, wherein the controller (200) is configured to:
when an event in which at least one of the satisfied conditions during charging of the plurality of battery cells (10, 10-n) is released occurs after the first control operation,
increase the lowered full charge voltage value to a second predefined voltage value.

7. The battery control system of claim 4, wherein the controller (200) is configured to:
when an event satisfying at least one of the first condition and the second condition occurs in a fully charged state of the plurality of battery cells (10, 10-n),
perform a second control operation to block trickle charging for the plurality of battery cells (10, 10-n).

8. The battery control system of claim 7, wherein the controller (200) is configured to:
when an event in which at least one of the satisfied conditions is released occurs in a state in which the trickle charging for the plurality of battery cells (10, 10-n) is blocked, after the second control operation,
allow trickle charging for the plurality of battery cells (10, 10-n).

9. A battery control apparatus connected with a temperature measuring device (110, 120) configured to measure a temperature (T1) of a first battery cell (10-1) disposed at a first point among a plurality of battery cells (10, 10-n) included in a battery assembly (20) and a temperature (T2) of a second battery cell (10-2) disposed at a second point among the plurality of battery cells (10, 10-n), wherein the second point is spaced apart from the first point, the battery control apparatus comprising:
at least one processor (210); and
a non-transitory memory (220) configured to store at least one instruction executed by the at least one processor (210),
wherein the at least one instruction includes:
an instruction to monitor the temperature (T1) of the first battery cell (10-1) and the temperature (T2) of the second battery cell (10-2); and
an instruction to perform a predefined control operation for preventing state degradation due to temperature imbalance between the plurality of battery cells (10, 10-n) based on a number of accumulated temperature imbalance occurrences and at least one of the temperature (T1) of the first battery cell (10-1) and the temperature (T2) of the second battery cell (10-2).

10. The battery control apparatus of claim 9, wherein the first point corresponds to a location having a higher instantaneous temperature value or a higher average temperature value than that of the second point.

11. The battery control apparatus of claim 10, wherein the first point corresponds to a location having a highest instantaneous temperature value or a highest average temperature value in the battery assembly (20), and
wherein the second point corresponds to a location having a lowest instantaneous temperature value or a lowest average temperature value within the battery assembly (20).

12. The battery control apparatus of claim 9, wherein the instruction to perform the predefined control operation includes an instruction to:
perform the predefined control operation according to whether or not the at least one of a first condition and a second condition is satisfied,
wherein the first condition is the temperature (T1) of the first battery cell (10-1) exceeding a predefined upper temperature limit (Tmax), and
wherein the second condition is a difference between the temperature (T1) of the first battery cell (10-1) and the temperature (T2) of the second battery cell (10-2) exceeding a predetermined reference difference value (Td).

13. The battery control apparatus of claim 12, wherein the instruction to perform the predefined control operation includes an instruction to:
when an event satisfying at least one of the first condition and the second condition occurs during charging of the plurality of battery cells (10, 10-n),
perform a first control operation of lowering a full charge voltage of the plurality of battery cells (10, 10-n) to a first predetermined voltage value being adjusted to a lower value as the number of accumulated temperature imbalance occurrences increases.

14. The battery control apparatus of claim 13, wherein the instruction to perform the predefined control operation includes an instruction to:
when an event in which at least one of the satisfied conditions during charging of the plurality of battery cells (10, 10-n) is released occurs, after the first control operation,
increase the lowered full charge voltage value to a second predefined voltage value.

15. The battery control apparatus of claim 12, wherein the instruction to perform the predefined control operation includes an instruction to:
when an event satisfying at least one of the first condition and the second condition occurs in a fully charged state of the plurality of battery cells (10, 10-n),
perform a second control operation to block trickle charging for the plurality of battery cells (10, 10-n).

16. The battery control apparatus of claim 15, wherein the instruction to perform the predefined control operation includes an instruction to:
when an event in which at least one of the satisfied conditions is released occurs in a state in which the trickle charging for the plurality of battery cells (10, 10-n) is blocked, after the second control operation,
allow trickle charging for the plurality of battery cells (10, 10-n).

17. A control method of a battery control system including a temperature measuring device (110, 120) configured to measure a temperature (T1) of a first battery cell (10-1) disposed at a first point among a plurality of battery cells (10, 10-n) included in a battery assembly (20) and a temperature (T2) of a second battery cell (10-2) disposed at a second point among the plurality of battery cells (10, 10-n), wherein the second point is spaced apart from the first point, and a control apparatus (200) configured to perform a predefined control operation based on the temperature (T1) of the first battery cell (10-1) and the temperature (T2) of the second battery cell (10-2), the control method comprising:
monitoring the temperature (T1) of the first battery cell (10-1) and the temperature (T2) of the second battery cell (10-2); and
performing a predefined control operation for preventing state degradation due to temperature imbalance between the plurality of battery cells (10, 10-n) based on a number of accumulated temperature imbalance occurrences and at least one of the temperature (T1) of the first battery cell (10-1) and the temperature (T2) of the second battery cell (10-2).

18. The control method of claim 17, wherein the performing the predefined control operation includes:
performing the predefined control operation according to whether or not the at least one of a first condition and a second condition is satisfied, wherein the first condition is the temperature (T1) of the first battery cell (10-1) exceeding a predefined upper temperature limit (Tmax) and the second condition is a difference between the temperature (T1) of the first battery cell (10-1) and the temperature (T2) of the second battery cell (10-2) exceeding a predetermined reference difference value (Td).

19. The control method of claim 18, wherein the performing the predefined control operation includes:
when an event satisfying at least one of the first condition and the second condition occurs during charging of the plurality of battery cells (10, 10-n),
performing a first control operation of lowering a full charge voltage of the plurality of battery cells (10, 10-n) to a first predetermined voltage value being adjusted to a lower value as the number of accumulated temperature imbalance occurrences increases.

20. The control method of claim 19, wherein the performing the predefined control operation further includes:
when an event in which at least one of the satisfied conditions during charging of the plurality of battery cells (10, 10-n) is released occurs, after the first control operation,
increasing the lowered full charge voltage value to a second predefined voltage value.

21. The control method of claim 18, wherein the performing the predefined control operation includes:
when an event satisfying at least one of the first condition and the second condition occurs in a fully charged state of the plurality of battery cells (10, 10-n),
performing a second control operation to block trickle charging for the plurality of battery cells (10, 10-n).

22. The control method of claim 21, wherein the performing the predefined control operation includes:
when an event in which at least one of the satisfied conditions is released occurs in a state in which the trickle charging for the plurality of battery cells (10, 10-n) is blocked, after the second control operation,
allowing trickle charging for the plurality of battery cells (10, 10-n).

## Patentansprüche

1. Batteriesteuersystem aufweisend:
eine Temperaturmessvorrichtung (110, 120), die konfiguriert ist, um eine Temperatur einer ersten Batteriezelle (10-1), die an einem ersten Punkt inmitten mehrerer Batteriezellen (10, 10-n) angeordnet ist, die in einer Batterieanordnung (20) enthalten sind, und eine Temperatur einer zweiten Batteriezelle (10-2), die an einem zweiten Punkt inmitten der mehreren Batteriezellen (10, 10-n) angeordnet ist, zu messen, wobei der zweite Punkt von dem ersten Punkt beabstandet ist; und
eine Steuereinheit (200), die konfiguriert ist, um:
die Temperatur (T1) der ersten Batteriezelle (10-1) und die Temperatur (T2) der zweiten Batteriezelle (10-2) zu überwachen, und
einen vordefinierten Steuervorgang zum Verhindern einer Zustandsverschlechterung aufgrund eines Temperaturungleichgewichts inmitten der mehreren Batteriezellen (10, 10-n) basierend auf einer Anzahl von akkumulierten Temperaturungleichgewichtsereignissen und mindestens einer der Temperatur (T1) der ersten Batteriezelle (10-1) und der Temperatur (T2) der zweiten Batteriezelle (10-2) durchzuführen.

2. Batteriesteuersystem nach Anspruch 1, wobei der erste Punkt einem Ort mit einem höheren momentanen Temperaturwert oder einem höheren Durchschnittstemperaturwert als dem des zweiten Punkts entspricht.

3. Batteriesteuersystem nach Anspruch 2, wobei der erste Punkt einem Ort mit einem höchsten momentanen Temperaturwert oder einem höchsten Durchschnittstemperaturwert in der Batterieanordnung (20) entspricht, und
wobei der zweite Punkt einem Ort mit einem niedrigsten momentanen Temperaturwert oder einem niedrigsten Durchschnittstemperaturwert in der Batterieanordnung (20) entspricht.

4. Batteriesteuersystem nach Anspruch 1, wobei die Steuereinheit (200) konfiguriert ist, um den vordefinierten Steuervorgang in Abhängigkeit davon durchzuführen, ob die mindestens eine von einer ersten Bedingung und einer zweiten Bedingung erfüllt ist oder nicht, wobei die erste Bedingung die Temperatur (T1) der ersten Batteriezelle (10-1) ist, die eine vordefinierte obere Temperaturgrenze (Tmax) überschreitet, und
wobei die zweite Bedingung eine Differenz zwischen der Temperatur (T1) der ersten Batteriezelle (10-1) und der Temperatur (T2) der zweiten Batteriezelle (10-2) ist, die einen vorbestimmten Referenzdifferenzwert (Td) überschreitet.

5. Batteriesteuersystem nach Anspruch 4, wobei die Steuereinheit (200) konfiguriert ist, um:
wenn ein Ereignis, das mindestens eine von der ersten Bedingung und der zweiten Bedingung erfüllt, während des Ladens der mehreren Batteriezellen (10, 10-n) auftritt,
einen ersten Steuervorgang zum Senken einer vollen Ladespannung der mehreren Batteriezellen (10, 10-n) auf einen ersten vorbestimmten Spannungswert durchzuführen, der auf einen niedrigeren Wert eingestellt wird, wenn die Anzahl von akkumulierten Temperaturungleichgewichtsereignissen zunimmt.

6. Batteriesteuersystem nach Anspruch 5, wobei die Steuereinheit (200) konfiguriert ist, um:
wenn ein Ereignis, bei dem mindestens eine der erfüllten Bedingungen während des Ladens der mehreren Batteriezellen (10, 10-n) freigegeben wird, nach dem ersten Steuervorgang auftritt,
den gesenkten vollen Ladespannungswert auf einen zweiten vordefinierten Spannungswert zu erhöhen.

7. Batteriesteuersystem nach Anspruch 4, wobei die Steuereinheit (200) konfiguriert ist, um:
wenn ein Ereignis, das mindestens eine von der ersten Bedingung und der zweiten Bedingung erfüllt, in einem vollständig geladenen Zustand der mehreren Batteriezellen (10, 10-n) auftritt,
einen zweiten Steuervorgang durchzuführen, um das Trickle-Laden für die mehreren Batteriezellen (10, 10-n) zu blockieren.

8. Batteriesteuersystem nach Anspruch 7, wobei die Steuereinheit (200) konfiguriert ist, um:
wenn ein Ereignis, bei dem mindestens eine der erfüllten Bedingungen freigegeben wird, in einem Zustand auftritt, in dem das Trickle-Laden für die mehreren Batteriezellen (10, 10-n) nach dem zweiten Steuervorgang blockiert ist,
das Trickle-Laden für die mehreren Batteriezellen (10, 10-n) zuzulassen.

9. Batteriesteuervorrichtung, die mit einer Temperaturmessvorrichtung (110, 120) verbunden ist, die konfiguriert ist, um eine Temperatur (T1) einer ersten Batteriezelle (10-1), die an einem ersten Punkt inmitten mehrerer Batteriezellen (10, 10-n) angeordnet ist, die in einer Batterieanordnung (20) enthalten sind, und eine Temperatur (T2) einer zweiten Batteriezelle (10-2), die an einem zweiten Punkt inmitten der mehreren Batteriezellen (10, 10-n) angeordnet ist, zu messen, wobei der zweite Punkt von dem ersten Punkt beabstandet ist, wobei die Batteriesteuervorrichtung aufweist:
mindestens einen Prozessor (210); und
einen nichtflüchtigen Speicher (220), der konfiguriert ist, um mindestens eine Anweisung zu speichern, die von dem mindestens einen Prozessor (210) ausgeführt wird,
wobei die mindestens eine Anweisung enthält:
eine Anweisung, um die Temperatur (T1) der ersten Batteriezelle (10-1) und die Temperatur (T2) der zweiten Batteriezelle (10-2) zu überwachen; und
eine Anweisung, um einen vordefinierten Steuervorgang zum Verhindern einer Zustandsverschlechterung aufgrund eines Temperaturungleichgewichts zwischen den mehreren Batteriezellen (10, 10-n) basierend auf einer Anzahl von akkumulierten Temperaturungleichgewichtsereignissen und mindestens einer der Temperatur (T1) der ersten Batteriezelle (10-1) und der Temperatur (T2) der zweiten Batteriezelle (10-2) durchzuführen.

10. Batteriesteuervorrichtung nach Anspruch 9, wobei der erste Punkt einem Ort mit einem höheren momentanen Temperaturwert oder einem höheren Durchschnittstemperaturwert als dem des zweiten Punkts entspricht.

11. Batteriesteuervorrichtung nach Anspruch 10, wobei der erste Punkt einem Ort mit einem höchsten momentanen Temperaturwert oder einem höchsten Durchschnittstemperaturwert in der Batterieanordnung (20) entspricht, und
wobei der zweite Punkt einem Ort mit einem niedrigsten momentanen Temperaturwert oder einem niedrigsten Durchschnittstemperaturwert in der Batterieanordnung (20) entspricht.

12. Batteriesteuervorrichtung nach Anspruch 9, wobei die Anweisung zum Durchführen des vordefinierten Steuervorgangs eine Anweisung enthält, um:
den vordefinierten Steuervorgang in Abhängigkeit davon durchzuführen, ob die mindestens eine von einer ersten Bedingung und einer zweiten Bedingung erfüllt ist oder nicht,
wobei die erste Bedingung die Temperatur (T1) der ersten Batteriezelle (10-1) ist, die eine vordefinierte obere Temperaturgrenze (Tmax) überschreitet, und
wobei die zweite Bedingung eine Differenz zwischen der Temperatur (T1) der ersten Batteriezelle (10-1) und der Temperatur (T2) der zweiten Batteriezelle (10-2) ist, die einen vorbestimmten Referenzdifferenzwert (Td) überschreitet.

13. Batteriesteuervorrichtung nach Anspruch 12, wobei die Anweisung zum Durchführen des vordefinierten Steuervorgangs eine Anweisung enthält, um:
wenn ein Ereignis, das mindestens eine von der ersten Bedingung und der zweiten Bedingung erfüllt, während des Ladens der mehreren Batteriezellen (10, 10-n) auftritt,
einen ersten Steuervorgang zum Senken einer vollen Ladespannung der mehreren Batteriezellen (10, 10-n) auf einen ersten vorbestimmten Spannungswert durchzuführen, der auf einen niedrigeren Wert eingestellt wird, wenn die Anzahl von akkumulierten Temperaturungleichgewichtsereignissen zunimmt.

14. Batteriesteuervorrichtung nach Anspruch 13, wobei die Anweisung zum Durchführen des vordefinierten Steuervorgangs eine Anweisung enthält, um:
wenn ein Ereignis, bei dem mindestens eine der erfüllten Bedingungen während des Ladens der mehreren Batteriezellen (10, 10-n) freigegeben wird, nach dem ersten Steuervorgang auftritt,
den gesenkten vollen Ladespannungswert auf einen zweiten vordefinierten Spannungswert zu erhöhen.

15. Batteriesteuervorrichtung nach Anspruch 12, wobei die Anweisung zum Durchführen des vordefinierten Steuervorgangs eine Anweisung enthält, um:
wenn ein Ereignis, das mindestens eine von der ersten Bedingung und der zweiten Bedingung erfüllt, in einem vollständig geladenen Zustand der mehreren Batteriezellen (10, 10-n) auftritt,
einen zweiten Steuervorgang durchzuführen, um das Trickle-Laden für die mehreren Batteriezellen (10, 10-n) zu blockieren.

16. Batteriesteuervorrichtung nach Anspruch 15, wobei die Anweisung zum Durchführen des vordefinierten Steuervorgangs eine Anweisung enthält, um:
wenn ein Ereignis, bei dem mindestens eine der erfüllten Bedingungen freigegeben wird, in einem Zustand auftritt, in dem das Trickle-Laden für die mehreren Batteriezellen (10, 10-n) nach dem zweiten Steuervorgang blockiert ist,
das Trickle-Laden für die mehreren Batteriezellen (10, 10-n) zuzulassen.

17. Steuerverfahren eines Batteriesteuersystems mit einer Temperaturmessvorrichtung (110, 120), die konfiguriert ist, um eine Temperatur (T1) einer ersten Batteriezelle (10-1), die an einem ersten Punkt inmitten mehrerer Batteriezellen (10, 10-n) angeordnet ist, die in einer Batterieanordnung (20) enthalten sind, und eine Temperatur (T2) einer zweiten Batteriezelle (10-2), die an einem zweiten Punkt inmitten der mehreren Batteriezellen (10, 10-n) angeordnet ist, zu messen, wobei der zweite Punkt von dem ersten Punkt beabstandet ist, und einer Steuervorrichtung (200), die konfiguriert ist, um einen vordefinierten Steuervorgang basierend auf der Temperatur (T1) der ersten Batteriezelle (10-1) und der Temperatur (T2) der zweiten Batteriezelle (10-2) durchzuführen, wobei das Steuerverfahren aufweist:
Überwachen der Temperatur (T1) der ersten Batteriezelle (10-1) und der Temperatur (T2) der zweiten Batteriezelle (10-2); und
Durchführen eines vordefinierten Steuervorgangs zum Verhindern einer Zustandsverschlechterung aufgrund eines Temperaturungleichgewichts zwischen den mehreren Batteriezellen (10, 10-n) basierend auf einer Anzahl von akkumulierten Temperaturungleichgewichtsereignissen und mindestens einer der Temperatur (T1) der ersten Batteriezelle (10-1) und der Temperatur (T2) der zweiten Batteriezelle (10-2).

18. Steuerverfahren nach Anspruch 17, wobei das Durchführen des vordefinierten Steuervorgangs enthält:
Durchführen des vordefinierten Steuervorgangs in Abhängigkeit davon, ob die mindestens eine von einer ersten Bedingung und einer zweiten Bedingung erfüllt ist oder nicht, wobei die erste Bedingung die Temperatur (T1) der ersten Batteriezelle (10-1) ist, die eine vordefinierte obere Temperaturgrenze (Tmax) überschreitet, und die zweite Bedingung eine Differenz zwischen der Temperatur (T1) der ersten Batteriezelle (10-1) und der Temperatur (T2) der zweiten Batteriezelle (10-2) ist, die einen vorbestimmten Referenzdifferenzwert (Td) überschreitet.

19. Steuerverfahren nach Anspruch 18, wobei das Durchführen des vordefinierten Steuervorgangs enthält:
wenn ein Ereignis, das mindestens eine von der ersten Bedingung und der zweiten Bedingung erfüllt, während des Ladens der mehreren Batteriezellen (10, 10-n) auftritt,
Durchführen eines ersten Steuervorgangs zum Senken einer vollen Ladespannung der mehreren Batteriezellen (10, 10-n) auf einen ersten vorbestimmten Spannungswert, der auf einen niedrigeren Wert eingestellt wird, wenn die Anzahl von akkumulierten Temperaturungleichgewichtsereignissen zunimmt.

20. Steuerverfahren nach Anspruch 19, wobei das Durchführen des vordefinierten Steuervorgangs ferner enthält:
wenn ein Ereignis, bei dem mindestens eine der erfüllten Bedingungen während des Ladens der mehreren Batteriezellen (10, 10-n) freigegeben wird, nach dem ersten Steuervorgang auftritt,
Erhöhen des gesenkten vollen Ladespannungswerts auf einen zweiten vordefinierten Spannungswert.

21. Steuerverfahren nach Anspruch 18, wobei das Durchführen des vordefinierten Steuervorgangs umfasst:
wenn ein Ereignis, das mindestens eine von der ersten Bedingung und der zweiten Bedingung erfüllt, in einem vollständig geladenen Zustand der mehreren Batteriezellen (10, 10-n) auftritt,
Durchführen eines zweiten Steuervorgangs, um das Trickle-Laden für die mehreren Batteriezellen (10, 10-n) zu blockieren.

22. Steuerverfahren nach Anspruch 21, wobei das Durchführen des vordefinierten Steuervorgangs umfasst:
wenn ein Ereignis, bei dem mindestens eine der erfüllten Bedingungen freigegeben wird, in einem Zustand auftritt, in dem das Trickle-Laden für die mehreren Batteriezellen (10, 10-n) nach dem zweiten Steuervorgang blockiert ist,
Zulassen des Trickle-Ladens für die mehreren Batteriezellen (10, 10-n).

## Revendications

1. Système de commande de batterie comprenant:
un dispositif de mesure de la température (110, 120) configuré pour mesurer une température d'une première cellule de batterie (10-1) disposée dans un premier point parmi une pluralité de cellules de batterie (10, 10-n) comprises dans un ensemble de batterie (20), et une température d'une deuxième cellule de batterie (10-2) disposée dans un deuxième point parmi la pluralité de cellules de batterie (10, 10-n), le deuxième point étant espacé du premier point ; et
un régulateur (200) configuré pour :
contrôler la température (T1) de la première cellule de batterie (10-1) et la température (T2) de la deuxième cellule de batterie (10-2), et
effectuer une opération de contrôle prédéfinie pour la prévention de la dégradation de l'état due à un déséquilibre thermique entre la pluralité de cellules de batterie (10, 10-n) d'après un certain nombre d'évènements cumulés de déséquilibre thermique, et au moins une de la température (T1) de la première cellule de batterie (10-1) et de la température (T2) de la deuxième cellule de batterie (10-2).

2. Système de commande de batterie selon la revendication 1, le premier point correspondant à un emplacement présentant une valeur de température instantanée plus élevée ou une valeur de température moyenne supérieure à celle du deuxième point.

3. Système de commande de batterie selon la revendication 2, le premier point correspondant à un emplacement présentant une valeur de température instantanée plus élevée ou une valeur de température moyenne supérieure dans l'ensemble de la batterie (20), et
le deuxième point correspondant à un emplacement présentant la valeur de température instantanée la plus basse ou la valeur de température moyenne la plus basse dans l'ensemble de la batterie (20).

4. Système de commande de batterie selon la revendication 1, le régulateur (200) étant configuré pour effectuer l'intervention de régulation prédéfinie selon que l'au moins une d'une première condition et d'une deuxième condition est satisfaite ou non, la première condition étant le dépassement d'une limite prédéfinie de la température supérieure (Tmax) par la température (T1) de la première cellule de batterie (10-1), et
la deuxième condition étant une différence entre le dépassement d'une valeur de différence de référence prédéfinie (Td) par la température (T1) de la première cellule de batterie (10-1) et la température (T2) de la deuxième cellule de batterie (10-2).

5. Système de commande de batterie selon la revendication 4, le régulateur (200) étant configuré,
lorsque survient un événement répondant à au moins une de la première condition et de la deuxième condition au cours de la charge de la pluralité de cellules de batterie (10, 10-n),
pour effectuer une première intervention de régulation comportant l'abaissement d'une tension de charge complète de la pluralité de cellules de batterie (10, 10-n) jusqu'à une première valeur de tension prédéfinie ajustée à une valeur inférieure au fur et à mesure de l'augmentation du nombre d'évènements cumulés de déséquilibre thermique.

6. Système de commande de batterie selon la revendication 5, le régulateur (200) étant configuré,
lorsque survient, après la première intervention de régulation, un événement au cours duquel au moins une des conditions satisfaites au cours de la charge de la pluralité de cellules de batterie (10, 10-n) est libérée,
pour augmenter, en la portant une deuxième valeur de tension prédéfinie, la valeur réduite de la tension de charge complète.

7. Système de commande de batterie selon la revendication 4, le régulateur (200) étant configuré,
lorsque survient un événement répondant à au moins une de la première condition et de la deuxième condition au cours d'un état de charge complète de la pluralité de cellules de batterie (10, 10-n),
pour effectuer une deuxième intervention de régulation afin de bloquer la charge d'entretien pour la pluralité de cellules de batterie (10, 10-n).

8. Système de commande de batterie selon la revendication 7, le régulateur (200) étant configuré,
lorsqu'un évènement, au cours duquel au moins une des conditions satisfaites est libérée, survient dans un état où la charge d'entretien pour la pluralité de cellules de batterie (10, 10-n) est bloquée, après la deuxième intervention de régulation,
pour permettre la charge d'entretien pour la pluralité de cellules de batterie (10, 10-n).

9. Appareil de commande de batterie connecté à un dispositif de mesure de la température (110, 120) configuré pour mesurer une température (T1) d'une première cellule de batterie (10-1) disposée dans un premier point parmi une pluralité de cellules de batterie (10, 10-n) comprises dans un ensemble de batterie (20), et une température (T2) d'une deuxième cellule de batterie (10-2) disposée dans un deuxième point parmi la pluralité de cellules de batterie (10, 10-n), le deuxième point étant espacé du premier point, l'appareil de commande de la batterie comprenant:
au moins un processeur (210) ; et
une mémoire non transitoire (220) configurée pour enregistrer au moins une instruction exécutée par l'au moins un processeur (210),
l'au moins une instruction comprenant :
une instruction pour contrôler la température (T1) de la première cellule de batterie (10-1) et la température (T2) de la deuxième cellule de batterie (10-2), et
une instruction pour effectuer une intervention de régulation prédéfinie pour la prévention de la dégradation de l'état due à un déséquilibre thermique entre la pluralité de cellules de batterie (10, 10-n) d'après un certain nombre d'évènements cumulés de déséquilibre thermique, et au moins une de la température (T1) de la première cellule de batterie (10-1) et de la température (T2) de la deuxième cellule de batterie (10-2).

10. Appareil de commande de batterie selon la revendication 9, le premier point correspondant à un emplacement présentant une valeur de température instantanée plus élevée ou une valeur de température moyenne supérieure à celle du deuxième point.

11. Appareil de commande de batterie selon la revendication 10, le premier point correspondant à un emplacement présentant une valeur de température instantanée plus élevée ou une valeur de température moyenne supérieure dans l'ensemble de la batterie (20), et
le deuxième point correspondant à un emplacement présentant une valeur de température instantanée la plus basse ou une valeur de température moyenne inférieure dans l'ensemble de la batterie (20).

12. Appareil de commande de batterie selon la revendication 9, l'instruction d'effectuer l'intervention de régulation prédéfinie comprenant une instruction pour :
effectuer l'intervention de régulation prédéfinie selon que l'au moins une d'une première condition et d'une deuxième condition est satisfaite ou non,
la première condition étant le dépassement, par la température (T1) de la première cellule de batterie (10-1), d'une limite prédéfinie de la température supérieure (Tmax), et
la deuxième condition étant le dépassement d'une valeur de différence de référence prédéfinie (Td) par la différence entre la température (T1) de la première cellule de batterie (10-1) et la température (T2) de la deuxième cellule de batterie (10-2).

13. Appareil de commande de batterie selon la revendication 12, l'instruction pour effectuer l'intervention de régulation prédéfinie comprenant :
lorsque survient un événement répondant à au moins une de la première condition et de la deuxième condition au cours de la charge de la pluralité de cellules de batterie (10, 10-n),
une instruction pour effectuer une première intervention de régulation comportant l'abaissement d'une tension de charge complète de la pluralité de cellules de batterie (10, 10-n) jusqu'à une première valeur de tension prédéfinie ajustée à une valeur inférieure au fur et à mesure de l'augmentation du nombre d'évènements cumulés de déséquilibre thermique.

14. Appareil de commande de batterie selon la revendication 13, l'instruction d'effectuer l'intervention de régulation prédéfinie comprenant,
lorsque survient, après la première intervention de régulation, un événement au cours duquel au moins une des conditions satisfaites durant la charge de la pluralité de cellules de batterie (10, 10-n) est libérée,
une instruction pour augmenter la valeur réduite de la tension de charge complète en la portant une deuxième valeur de tension prédéfinie.

15. Appareil de commande de batterie selon la revendication 12, l'instruction d'exécution de l'intervention de régulation prédéfinie comprenant,
lorsque survient un événement répondant à au moins une de la première condition et de la deuxième condition au cours d'un état de charge complète de la pluralité de cellules de batterie (10, 10-n),
une instruction pour effectuer une deuxième intervention de régulation pour bloquer la charge d'entretien pour la pluralité de cellules de batterie (10, 10-n).

16. Appareil de commande de batterie selon la revendication 15, l'instruction d'effectuer l'intervention de régulation prédéfinie comprenant,
lorsqu'un événement, au cours duquel au moins une des conditions satisfaites est libérée, survient dans un état où la charge d'entretien pour la pluralité de cellules de batterie (10, 10-n) est bloquée, après la deuxième intervention de régulation,
une instruction pour permettre une charge d'entretien pour la pluralité de cellules de batterie (10, 10-n).

17. Procédé de commande d'un système de commande de batterie, comprenant un dispositif de mesure de la température (110, 120) configuré pour mesurer une température (T1) d'une première cellule de batterie (10-1) disposée dans un premier point parmi une pluralité de cellules de batterie (10, 10-n) comprises dans un ensemble de batterie (20), et une température (T2) d'une deuxième cellule de batterie (10-2) disposée dans un deuxième point parmi la pluralité de cellules de batterie (10, 10-n), le deuxième point étant espacé du premier point, et un appareil de commande (200) configuré pour effectuer une intervention de régulation prédéfinie d'après la température (T1) de la première cellule de batterie (10-1) et la température (T2) de la deuxième cellule de batterie (10-2), le procédé de commande comprenant :
le contrôle de la température (T1) de la première cellule de batterie (10-1) et de la température (T2) de la deuxième cellule de batterie (10-2) ; et
l'exécution d'une intervention de régulation prédéfinie pour la prévention d'une dégradation de l'état due à un déséquilibre thermique entre la pluralité de cellules de batterie (10, 10-n) d'après un certain nombre d'évènements cumulés de déséquilibre thermique, et au moins une de la température (T1) de la première cellule de batterie (10-1) et de la température (T2) de la deuxième cellule de batterie (10-2).

18. Procédé de commande selon la revendication 17, l'exécution de l'intervention de régulation prédéfinie comprenant :
l'exécution de l'intervention de régulation prédéfinie selon qu'au moins une d'une première condition et d'une deuxième condition est satisfaite ou non, la première condition étant le dépassement, par la température (T1) de la première cellule de batterie (10-1), d'une limite prédéfinie de la température supérieure (Tmax), et la deuxième condition étant le dépassement, par la différence entre la température (T1) de la première cellule de batterie (10-1), et la température (T2) de la deuxième cellule de batterie (10-2), d'une valeur de différence de référence prédéfinie (Td).

19. Procédé de commande selon la revendication 18, l'exécution de l'intervention de régulation prédéfinie comprenant :
lorsque survient un événement répondant à au moins une de la première condition et de la deuxième condition au cours de la charge de la pluralité de cellules de batterie (10, 10-n),
l'exécution d'une première intervention de régulation comportant l'abaissement d'une tension de charge complète de la pluralité de cellules de batterie (10, 10-n) jusqu'à une première valeur de tension prédéfinie ajustée à une valeur inférieure au fur et à mesure de l'augmentation du nombre d'évènements cumulés de déséquilibre thermique.

20. Procédé de commande selon la revendication 19, l'exécution de l'intervention de régulation prédéfinie comprenant en outre :
lorsque survient, après la première intervention de régulation, un événement au cours duquel au moins une des conditions satisfaites durant la charge de la pluralité de cellules de batterie (10, 10-n) est libérée,
l'augmentation de la valeur de tension de charge complète abaissée en la portant une deuxième valeur de tension prédéfinie.

21. Procédé de commande selon la revendication 18, l'exécution de l'intervention de régulation prédéfinie comprenant :
lorsque survient un événement répondant à au moins une de la première condition et de la deuxième condition au cours d'un état de charge complète de la pluralité de cellules de batterie (10, 10-n),
l'exécution d'une deuxième intervention de régulation pour bloquer la charge d'entretien pour la pluralité de cellules de batterie (10, 10-n).

22. Procédé de commande selon la revendication 21, l'exécution de l'intervention de régulation prédéfinie comprenant :
lorsqu'un évènement, au cours duquel au moins une des conditions satisfaites est libérée, survient dans un état où la charge d'entretien pour la pluralité de cellules de batterie (10, 10-n) est bloquée, après la deuxième intervention de régulation,
une instruction pour permettre une charge d'entretien pour la pluralité de cellules de batterie (10, 10-n).
